## Europäisches Patentamt
## European Patent Office
## Office européen des brevets

(19)

(11) Veröffentlichungsnummer: **0 204 867**
**A1**

(12) # EUROPÄISCHE PATENTANMELDUNG

(21) Anmeldenummer: 85115030.0

(22) Anmeldetag: 27.11.85

(51) Int. Cl.⁴: **G 02 B 27/22**

(30) Priorität: 09.05.85 DE 3516697

(43) Veröffentlichungstag der Anmeldung:
17.12.86 Patentblatt 86/51

(84) Benannte Vertragsstaaten:
DE FR GB IT

(71) Anmelder: Blaupunkt-Werke GmbH
Robert-Bosch-Strasse 200
D-3200 Hildesheim(DE)

(72) Erfinder: Timm, Horst, Ing. grad.
Ulmenweg 31
D-3200 Hildesheim(DE)

(74) Vertreter: Eilers, Norbert, Dipl.-Phys.
Blaupunkt-Werke GmbH Robert-Bosch-Strasse 200
D-3200 Hildesheim(DE)

(54) Vorrichtung zur Betrachtung von stereoskopischen Bildern.

(57) Bei einer Vorrichtung zur Betrachtung von stereoskopischen Bildern in Form einer Brille mit einem oder mehreren
Prismen (2) ist mindestens ein Prisma um die Augenachse
drehbar angeordnet, so daß neben- oder übereinander
dargebotene Bilder und Bilder, die horizontal und vertikal
gegeneinander versetzt sind, zur Deckung gebracht werden
können. Ist für beide Augen je ein drehbares Prisma
vorgesehen, so kann die Vorrichtung auch für verschiedene
Betrachtungs- bzw. Bildmittenabstände eingestellt werden.
Auch die Anordnung von zwei gegeneinander verdrehbaren
Prismen (2) vor einem oder beiden Augen ist möglich.

EP 0 204 867 A1

Ansicht von oben

Fig. 1

**BLAUPUNKT-WERKE GMBH, 3200 Hildesheim**

**Vorrichtung zur Betrachtung von stereoskopischen Bildern**

Beim Stereo-Fernsehen oder bei der Stereo-Fotografie wird das aufzunehmende Objekt von zwei vorzugsweise im Augenabstand angeordneten Kameras aufgenommen. Bei der Betrachtung derart aufgenommener Bilder ist es nun erforderlich, daß jedes Auge des Betrachters das entsprechende Bild sieht, daß also das linke Auge das von der linken Kamera aufgenommene und das rechte Auge das von der rechten Kamera aufgenommene Bild sieht. Eine einfache Lösung hierfür besteht beispielsweise in den bekannten Betrachtungsgeräten für Diapositive. Hierbei wird jeweils durch ein Okular eines der zu einem Bildpaar gehörenden Bilder betrachtet. Die Betrachtung durch Okulare weist jedoch Nachteile auf. Beispielsweise kann nur ein Betrachter zur Zeit das Bild bzw. das Bildpaar betrachten. Außerdem wird bei nichtbeweglichen Bildwiedergabegeräten eine starre Kopfhaltung des Betrachters erzwungen.

R.-Nr. 1864  — 2 —  0204867

Zur Vermeidung dieser Nachteile sind andere Vorrichtungen und Verfahren zur Betrachtung von stereoskopischen Bildern bekannt geworden. Bei einem dieser Verfahren, dem sogenannten Anaglyphen-Verfahren werden die beiden Bilder in unterschiedlichen Farben auf einer beiden Bildern gemeinsamen Bildfläche zur Betrachtung dargeboten. So wird beispielsweise das für das linke Auge bestimmte Bild in roter Farbe gezeigt, während das Bild für das rechte Auge grün ist. Durch die Verwendung einer entsprechend gefärbten Brille wird erreicht, daß jedes Auge nur das für dieses Auge bestimmte Bild aufnimmt. Neben anderen Nachteilen hat dieses Verfahren den Nachteil, daß die Wiedergabe bzw. Betrachtung von farbigen Bildern praktisch ausgeschlossen ist. Zur Vermeidung dieses Nachteils wurde als Unterscheidungsmerkmal zwischen dem "linken" und "rechten" Bild eine voneinander abweichende Polarisation vorgeschlagen. Eine einfache Vorrichtung zur Wiedergabe von stereoskopischen Bildern nach diesem Verfahren ist jedoch noch nicht bekannt geworden.

Eine weitere Gruppe von bekannten Vorschlägen besteht darin, daß dem Betrachter zwei über- oder nebeneinander liegende Bilder dargeboten werden, wobei eine Prismen-Vorrichtung dem Betrachter ermöglicht, die Bilder zur Deckung zu bringen. Ein derartiges Verfahren und eine entsprechende Betrachtungsvorrichtung ist beispielsweise in Moderne Fototechnik 4/84, Seite 194 beschrieben. Diese Vorrichtung ist jedoch nur für einen jeweils vom Abstand der Bilder abhängigen Betrachtungsabstand geeignet — und auch nur für eine vorgegebene Lage der Bilder zueinander (ob neben- oder übereinander).

Aufgabe der Erfindung ist es, eine Vorrichtung zur Betrachtung von stereoskopischen Bildern vorzuschlagen, welche bei verschiedenen Betrachtungsabständen verwendbar ist und nicht an eine vorgegebene Anordnung der stereoskopischen Bilder gebunden ist.

Die erfindungsgemäße Vorrichtung mit den kennzeichnenden Merkmalen des Hauptanspruchs hat demgegenüber den Vorteil, daß sie sich auf verschiedene Betrachtungsabstände einstellen läßt und auch bei jeder Anordnung der stereoskopischen Bilder zueinander verwendet werden kann. Als weiterer Vorteil ist anzusehen, daß sie ein geringes Gewicht aufweist und einfach herzustellen ist.

Durch die in den Unteransprüchen aufgeführten Maßnahmen sind vorteilhafte Weiterbildungen und Verbesserungen der im Hauptanspruch angegebenen Vorrichtung möglich.

Mehrere Ausführungsbeispiele der Erfindung sind in der Zeichnung an Hand mehrerer Figuren dargestellt und in der nachfolgenden Beschreibung näher erläutert. Es zeigt:

Fig. 1 ein Ausführungsbeispiel der Erfindung in mehreren Ansichten und

Fig. 2 bis 5 schematisch die geometrisch-optischen Verhältnisse bei der Anwendung verschiedener Ausführungsasbeispiele.

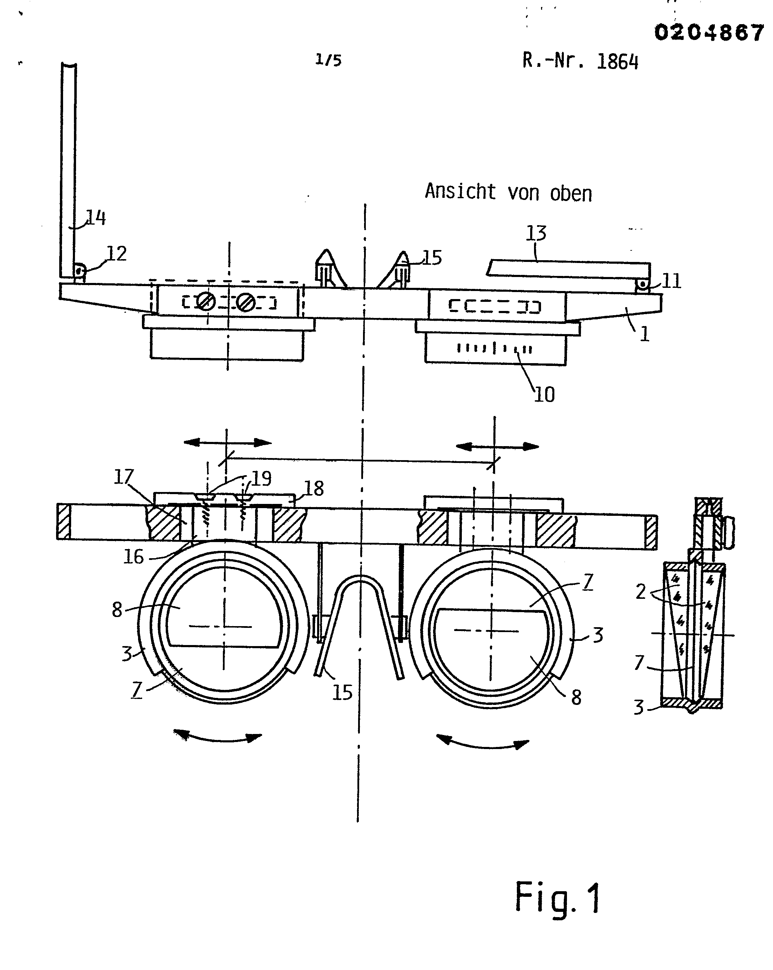

An einer Strebe 1 sind über jeweils ein Gelenk 11, 12 zwei in Fig. 1 nur schematisch angedeutete Bügel 13, 14 angeordnet. Ebenfalls wie bei einer Brille üblich, befindet sich in der Mitte der Strebe 1 eine Vorrichtung 15 zum Abstützen der Betrachtungsvorrichtung auf der Nase. Links und rechts davon ist jeweils eine ringförmige Halterung 3 (Fassung) für die drehbaren Prismen 2 vorgesehen. Die Halterung 3 weist einen Fortsatz 16 auf, welcher in eine längliche Aussparung 17 der Strebe 1 hineinragt, so daß die Halterung zur Einstellung des Augenabstandes verschiebbar an der Strebe 1 befestigt ist. Durch eine Klemmvorrichtung 18 und Schrauben 19 ist die jeweils vorgenommene Einstellung arretierbar bzw. eine derartige Reibung zwischen dem Klemmstück 18 und der Strebe 1 einstellbar, so daß lediglich beabsichtigte Verschiebungen der Halterung 3 möglich sind.

In den Halterungen 3 sind ferner Blenden 7 angeordnet, welche verhindern sollen, daß das jeweilige Auge das Bild, welches für das andere Auge bestimmt ist, nicht sieht. Dazu einige Erläuterungen: Bei Betrachtung von zwei übereinander oder nebeneinander angeordneten Bildern, welche zusammen ein stereoskopisches Bild ergeben, sieht ein Betrachter ohne Betrachtungsgerät natürlich zwei nebeneinander oder übereinander angeordnete Bilder. Setzt er das Betrachtungsgerät auf, sieht er sofern das Betrachtungsgerät nicht auf den Betrachtungsabstand bzw. den Abstand der beiden Bilder voneinander oder die Lage der beiden Bilder zueinander nicht eingestellt ist, vier Bilder. Bei richtiger Einstellung der erfindungsgemäßen Vorrichtung würde der Betrachter ohne weitere Maßnahmen drei Bilder sehen, und zwar das zusammengesetzte, also räumlich erscheinende Bild in der Mitte und jeweils mit einem Auge ein Bild darüber und darunter bzw. links und rechts davon. Zur Abdeckung dieser störenden Zweitbilder dienen die Blenden 7, welche in der in Fig. 1 gezeig-

...

ten Stellung für übereinander angeordnete Bilder vorgesehen sind. Der lichtdurchlässige Ausschnitt 8 der Blenden 7 ist größer als der nichtlichtdurchlässige und umfaßt vor allem das mittlere Sehfeld. In einer bevorzugten Ausführungsform können die Blenden 7 in den Halterungen 3 gedreht werden, damit die erfindungsgemäße Vorrichtung an verschiedenen Lagen der Bilder zueinander angepaßt werden kann.

Die Halterungen 3 können als offene Ringe ausgebildet sein, damit ein Auswechseln der Prismen und/oder der Blenden leicht möglich ist.

Je nach Ausführungsform der Erfindung können eine oder beide der Halterungen 3 mit Prismen versehen sein.

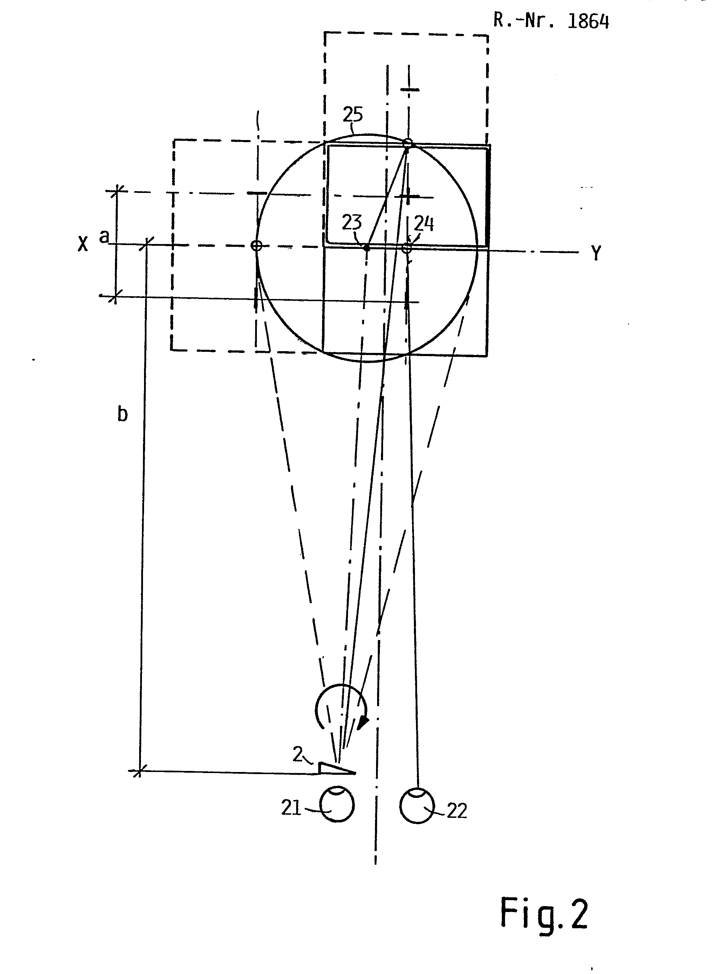

Die Figuren 2 bis 5 stellen schematisch die geometrisch-optischen Verhältnisse bei der Anwendung verschiedener Ausführungsformen der erfindungsgemäßen Vorrichtung dar. In den Figuren 2 bis 5 sind jeweils das linke Auge 21 und das rechte Auge 22, sowie die verschiedenen Prismen derart dargestellt, daß die durch die Augenachse und die Verbindungslinie zwischen den Augen festgelegte Ebene in der Zeichenebene liegt. Die stereoskopischen Bilder, sowie deren Bewegung auf Kreisbahnen wurde von einer an sich senkrecht zur obenerwähnten Ebene liegende Ebene x - y in die Zeichenebene um $90^{\circ}$ umgeklappt, damit in einer Figur gleichzeitig die Prismen und die dazugehörigen möglichen Bewegungen der stereoskopischen Bilder darstellbar sind. Der Betrachtungsabstand ist mit b, der Bildmittenabstand mit a bezeichnet. Von den vom Auge 21, 22 bzw. Prisma ausgehenden Linien stellen strichpunktierte Linien

...

die Augenachse bzw. den mittleren Sehstrahl dar bei einer vorgegebenen Konvergenz, bei der die Augen 21, 22 die Punkte 23 und 24 auf der Ebene x - y fixieren. Die gestrichelten Linien markieren die beiden größtmöglichen Ablenkungen nach rechts und links bei entsprechender Drehung des Prismas. Die von je einem Auge ausgehende durchgezogene Linie stellt die Blickrichtung dar, die sich aus derjenigen Drehung des Prismas ergibt, für welche die ebenfalls mit durchgezogener Linie dargestellten Bilder zur Deckung kommen. Die Blickrichtung des Auges selbst bleibt dabei so, wie es strichpunktiert angedeutet ist. Die gestrichelten Rechtecke stellen beispielhaft andere Bildflächen dar, die zur Deckung gebracht werden können.

Bei der in Fig. 2 dargestellten Ausführungsform ist lediglich eine der Halterungen mit einem Prisma 2 versehen. Es ist somit möglich, daß von dem Auge 21 gesehene Bild auf einer Kreisbahn 25 durch Drehen des Prismas zu verschieben. Der Radius der Kreisbahn ist durch den Ablenkwinkel des Prismas und den Betrachtungsabstand gegeben. Mit dieser Ausführungsform der erfindungsgemäßen Vorrichtung kann also für einen gegebenen Abstand der Mitten der beiden stereoskopischen Bilder nur ein vorgegebener Betrachtungsabstand verwendet werden. Mit Hilfe der Vorrichtung kann jedoch an verschiedene Lagen der stereoskopischen Bilder (neben- oder übereinander) angepaßt werden. Dieses ist in Fig. 2 schematisch dargestellt.

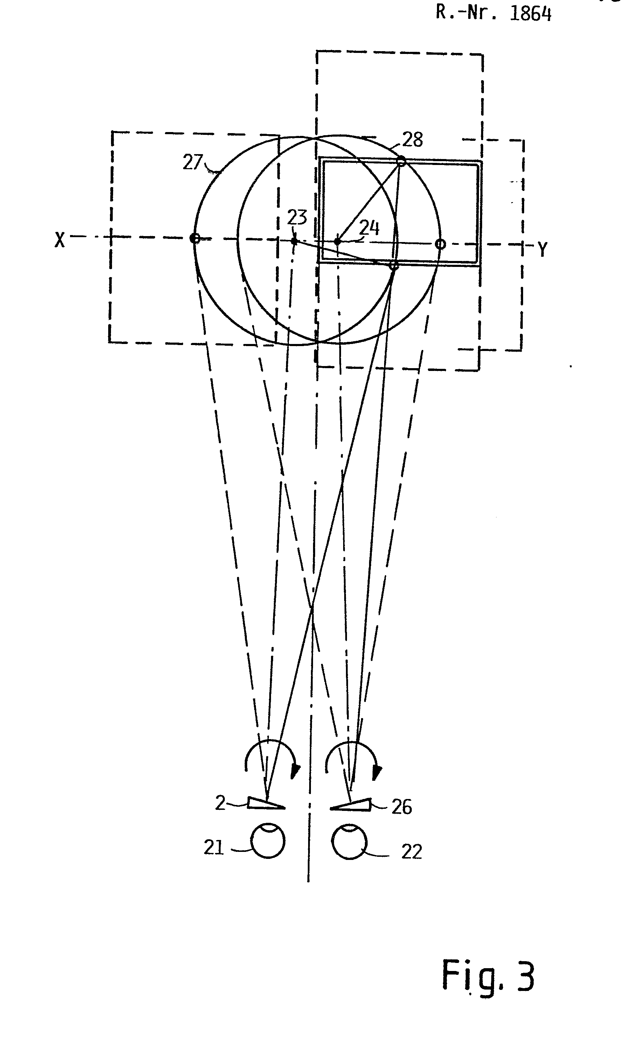

Bei einer zweiten Ausführungsform, welche schematisch in Fig. 3 dargestellt ist, ist jedem Auge 21, 22 ein Prisma 2, 26 zugeordnet, wobei beide Prismen den gleichen Ablenkwinkel aufweisen. Hierbei ent-

...

stehen durch Drehung der Prismen zwei versetzte Kreisbahnen 27, 28, auf denen die Bilder zur Deckung gebracht werden. Eine Anpassung an beliebige Betrachtungsabstände ist möglich. Lediglich in Richtung auf geringe Betrachtungsabstände liegt eine Begrenzung durch die Ablenkwinkel bezogen auf den Bildmittenabstand vor.

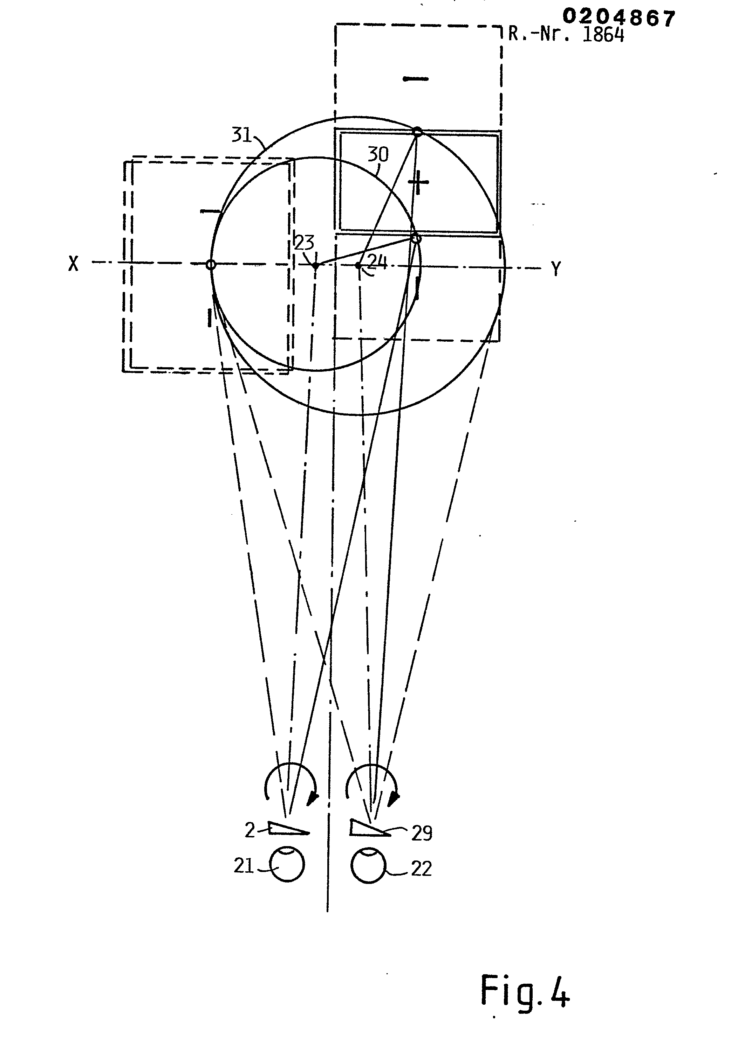

Die Funktion einer dritten Ausführungsform ist in Fig. 4 schematisch dargestellt. Hierbei sind die Ablenkwinkel der Prismen 2, 29 verschieden groß, so daß eines der Bilder auf einer kleineren Kreisbahn 30 als die Kreisbahn 31 des anderen verschiebbar ist. Hierbei entsteht entsprechend dem Bildmittenabstand der Doppelbilder in mehreren Positionen eine Deckung der Bilder und somit Stereo-Effekt.

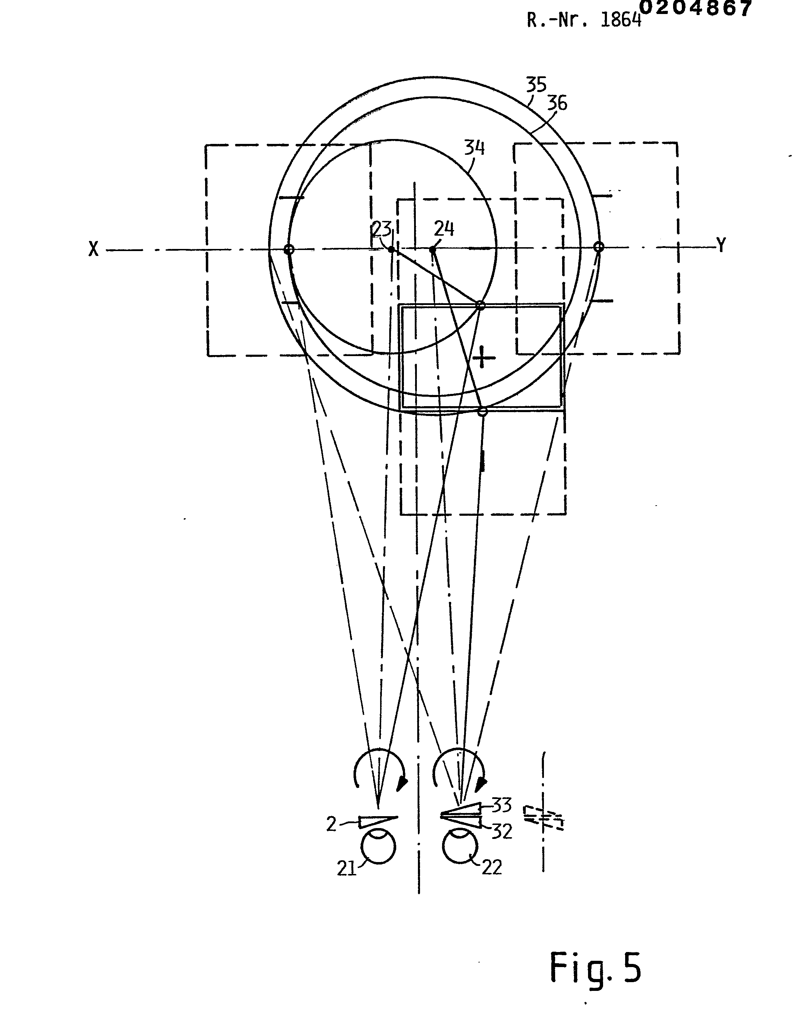

Schließlich ist in Fig. 5 noch eine vierte Ausführungsform der erfindungsgemäßen Vorrichtung dargestellt, bei welcher für ein Auge zwei drehbare Prismen 32, 33 vorgesehen sind, die gegeneinander und gemeinsam gegenüber der Halterung drehbar sind. Hierbei kann das Bild des linken Auges auf einem Kreis 34 mit einem konstanten Radius und das Bild des rechten Auges auf einem Kreis mit veränderlichem Radius verschoben werden, wobei in der Figur der größtmögliche Kreis 35 und ein etwas kleinerer Kreis 36 dargestellt ist. Sind die Prismen 32, 33 entgegengesetzt, wie es gestrichelt angedeutet ist, so wird der Radius null, das heißt, das rechte Bild wird nicht verschoben. Durch eine gegenläufige Drehung der beiden einem Auge zugeordneten Prismen erhält man eine annähernd geradlinige Bewegung. Eine Anpassung an verschiedene Betrachtungsabstände und verschiedene Lagen der stereoskopischen Bilder zueinan-

...

der ist somit besonders vorteilhaft möglich. Schließlich besteht noch die in den Figuren nicht dargestellte Möglichkeit für beide Augen jeweils zwei Prismen vorzusehen.

Wie in der Beschreibungseinleitung erläutert, ist die erfindungsgemäße Vorrichtung nicht an eine vorgegebene Anordnung der stereoskopischen Bilder gebunden. Der Einfachheit halber wurden in der Beschreibung übereinander oder nebeneinander angeordnete Bilder erwähnt. Es ist jedoch eine Betrachtung von Bildern, welche sowohl horizontal als auch vertikal gegeneinander versetzt sind, mit der erfindungsgemäßen Vorrichtung ohne weiteres möglich.

In Abänderung der in Fig. 1 dargestellten Ausführungsform, kann die erfindungsgemäße Vorrichtung auch derart ausgebildet sein, daß sie auf eine vorhandene Brille aufsteckbar ist, so daß die Benutzung durch Fehlsichtige erleichtert wird.

Patentansprüche

1. Vorrichtung zur Betrachtung von stereoskopischen Bildern in Form einer Brille mit einem oder mehreren Prismen, dadurch gekennzeichnet, daß mindestens ein Prisma (2) um die Augenachse drehbar angeordnet ist.

2. Vorrichtung nach Anspruch 1, dadurch gekennzeichnet, daß nur für ein Auge (21) ein drehbares Prisma (2) angeordnet ist.

3. Vorrichtung nach Anspruch 1, dadurch gekennzeichnet, daß für beide Augen (21, 22) je ein drehbares Prisma (2, 26) vorgesehen ist, und daß die optisch wirksamen Winkel beider Prismen (2, 26) gleich sind.

4. Vorrichtung nach Anspruch 1, dadurch gekennzeichnet, daß für beide Augen (21, 22) je ein drehbares Prisma (2, 29) vorgesehen ist, und daß die optisch wirksamen Winkel beider Prismen (2, 29) verschieden sind.

5. Vorrichtung nach Anspruch 1, dadurch gekennzeichnet, daß für ein Auge (22) zwei drehbare Prismen (2, 32, 33) vorgesehen sind, die gegeneinander und gemeinsam gegenüber einer Halterung (3) drehbar sind.

0204867

6. Vorrichtung zur Betrachtung von stereoskopischen Bildern in Form einer Brille nach Anspruch 1, dadurch gekennzeichnet, daß zwei Blenden (7) vorgesehen sind, welche vom Sehfeld beider Augen den mittleren Teil freigeben und für jeweils ein Auge einen Teil des Sehfeldes abdecken, welcher für das andere Auge freigegeben ist.

7. Vorrichtung nach Anspruch 6, dadurch gekennzeichnet, daß die Blenden (7) drehbar angeordnet sind.

8. Vorrichtung nach einem der vorhergehenden Ansprüche, dadurch gekennzeichnet, daß je drehbarem Prisma eine ringförmige Halterung (3) vorgesehen ist.

9. Vorrichtung nach einem der vorangehenden Ansprüche, dadurch gekennzeichnet, daß der Abstand der Mitten der Prismen (2) einstellbar ist.

10. Vorrichtung nach Anspruch 9, dadurch gekennzeichnet, daß die Halterungen für die Prismen an einer Strebe (1) verschiebbar befestigt sind.

0204867

Ansicht von oben

Fig.1

R.-Nr. 1864

Fig.2

Fig. 3

0204867
R.-Nr. 1864

Fig.4

R.-Nr. 1864 **0204867**

Fig. 5

Europäisches
Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | FR-A-1 077 547  (J-M. REISCH)<br><br>* Seite 2, Figuren 1-9 *<br><br>--- | 1,3,5,6 | G 02 B 27/22 |
| X | FR-A- 825 604  (Y. LE PRIEUR)<br>* Seite 3, Zeilen 4-15, Figur 12 *<br><br>--- | 1,3,6 | |
| X | CH-A- 291 563  (LYTAX)<br>* Anspruch 1 *<br><br>--- | 1,5 | |
| A | FR-A- 996 753  (A-P-R. DUJARDIN)<br>* Ansprüche 1, 2 *<br><br>--- | 1 | |
| A | DE-U-6 919 767  (G. NEUBAUER et al.)<br>* Anspruch 3 *<br><br>--- | 1 | RECHERCHIERTE SACHGEBIETE (Int Cl.4) |
| A | FR-A- 540 393  (G. BERNARD)<br><br>* Anspruch 1 *<br><br>----- | | G 02 B 27/22<br>G 02 B 27/24<br>G 02 C 7/14 |

Der vorliegende Recherchenbericht wurde für alle Patentansprüche erstellt.

| Recherchenort<br>BERLIN | Abschlußdatum der Recherche<br>12-08-1986 | Prüfer<br>FUCHS R |
|---|---|---|